# EUROPEAN PATENT APPLICATION

(11) **EP 2 669 863 A1**
(43) Date of publication of application: **04.12.2013**
(21) Application number: 12739684.4
(22) Date of filing: 23.01.2012
(51) Int. Cl.: G06T 1/00

(54) **IMAGE READING DEVICE**

(30) Priority: 27.01.2011 JP 2011014889
(71) Applicant: NEC Engineering, Ltd., Tokyo 140-0002 (JP)
(72) Inventor: YAMAMOTO, Tetsuichiro, Tokyo 140-0002 (JP)
(74) Representative: Betten & Resch
(86) International application number: PCT/JP2012/000374
(87) International publication number: WO 2012/102000

(57) **Abstract**

An image reading device 1 includes: a diffuser 5 for resting a finger 6 on its upper surface and for diffusing light entering from its lower surface; a light source 11 for irradiating the finger 6 rested on the diffuser 5 with light from the lower surface of the diffuser 5 at a predetermined angle of irradiation; a mirror 13 for receiving the light reflected from the finger 6 on the diffuser 5 which has been emitted from the light source 11; a CCD 12 for, by receiving the light reflected with the mirror 13, capturing an image of the finger 6 on the diffuser 5 in a horizontal scanning direction from the lower surface of the diffuser 5, and then outputting an image signal; and a motor 25 for moving, in a vertical scanning direction, a reading unit 3 which includes at least the light source 11, the mirror 13, and the CCD 12. The upper surface of the diffuser 5 on which the finger 6 is rested is set to be a diffusion surface, and the lower surface of the diffuser 5 through which the light from the light source 11 enters is set as a non-diffusion surface.

## Description

### Technical Field

The present invention generally relates to an image reading device for reading a surface image of an object by imaging the object from a reverse side of a sensing table, and more particularly, to an image reading device suitable for obtaining a sharp clear image.

### Background Art

Conventional methods of identifying an individual include one that uses a fingerprint. In this method, identification is generally done by inputting an image of a fingerprint into a device and checking the input image with an image of a pre-registered fingerprint. An example of a method for inputting a fingerprint image is such that a finger as the object is irradiated with light from a reverse side of a sensing table on which the finger is rested. The finger is then imaged by a two-dimensional sensor such as charge-coupled devices (CCD).

In the above method, a reflection of the light irradiated upon the finger is received by the two-dimensional sensor, thereby imaging surface irregularities of the fingerprint in accordance with intensity of the received light. This method, however, had a problem in that the light received by the two-dimensional sensor is too weak for obtaining a sharp image reproducing the surface irregularities of the fingerprint.

Recently, devices that are made with regard to such problem are proposed. In those devices, various optical members are used for a sensing table in order to sharply reproduce surface irregularities of a fingerprint by giving a significant difference in contrast between concavities and convexities of the finger. For example, Patent Literature 1,2 and 3 each describes a device in which a prism lens, an optical-fiber plate, and an optical waveguide is used in a sensing table for obtaining fingerprint images.

### Citation List

### Patent Literature

PLT 1: JP-A-2003-50993
PLT 2: JP-B-2579375
PLT 3: JP-A-10-143663

### Summary of Invention

### Technical Problem

The devices described in Patent Literature 1 and 2 employ a prism lens and an optical-fiber plate, respectively. Therefore, these devices were required to have a space for locating the optical members inside, which made it difficult to miniaturize the entire device. In addition, since prism lenses and optical-fiber plates are special optical parts, the cost of the devices tend to be increased.

The device described in Patent Literature 3 uses an light guide plate as a sensing table. This device cannot obtain a sufficient contrast and it is thus difficult to sharpen fingerprint images.

The devices described in Patent Literature 1,2 and 3 use a two-dimensional sensor as an optical receiver. It is thus necessary to combine a plurality of images as to acquire one fingerprint image. In the image combining, distortion occurs at connections between the combined images. Processing such as correcting distortion during image combination and removing distortion from the image obtained after the combination will in turn be demanded. Therefore, the devices needs to be prepared with an appropriate configuration to conduct such image processing, which makes image processing circuits and software for processing images complicated, resulting in the devices to increase in cost.

The present invention has been made in view of the problems of the conventional technique. An exemplary object of the present invention is to provide an image reading device that can sharpen obtained images and is able to be miniaturized while its cost is suppressed.

### Solution to Problem

In order to fulfill the above object, one exemplary aspect of the present invention is an image reading device for reading an image of a fingerprint or other objects, the image reading device comprising: an object resting unit constructed of a plate member that transmits light, the object resting unit resting the object thereon; and an image reading unit including a light source for irradiating the object with light, and image capturing means for capturing the image of the object and outputting an image signal associated with the object; wherein: the image reading unit further includes image reading means positioned at a side opposite to the surface of the object resting unit with which the object contacts, the image reading means reading one line of a light receiving surface of the object as a horizontal scanning by using a line sensor provided to the image capturing means, and transport means for moving the image reading unit in a vertical scanning direction perpendicular to the horizontal scanning; and the object resting unit includes a diffusion member for diffusing light.

According to the present invention, an image having a sharp contrast can be obtained by diffusing the light emitted from the light source with the diffusion member. This enables the image to be sharpened. In addition, the diffusion member is used instead of a special optical member so that the device can be miniaturized and reduced in cost.

Further, in accordance with the present invention, image acquisition can be implemented by merely connecting together a plurality of sets of acquired line-by-line image data. There is no need to perform advanced image-combining processing. The complexity of signal processing circuits and software can be resolved and the device can be reduced in cost.

The diffusion member in the image reading device can have a diffusion face at the surface on which the object is rested. This enables more effective irradiation of the object with the light diffused by the diffusion member, and correspondingly enhances the sharpness of the image.

The diffusion member in the image reading device can diffuse incident light in the vertical scanning direction. This enables more effective irradiation of the object with the light diffused by the diffusion member, and correspondingly enhances the sharpness of the image.

In the image reading device, the light source can have its irradiation angle determined according to an angle at which the diffusion member diffuses the light.

The light source and the line sensor are arranged such that the line sensor receives light reflected, at a position where the object contacts with the object cresting unit, with a reflection angle equal to an incidence angle. This enables the line sensor to efficiently receive reflected waves of the light emitted to the object from the light source. The image can be more sharpened.

The image reading device may further comprise: a touch panel attached onto the surface of the diffusion member, the touch panel outputting coordinate information in the vertical scanning direction which represents a pressing position at which the object presses the touch panel; and detection means for detecting, in accordance with the coordinate information output from the touch panel, a moving distance through which the pressing position of the object has moved in the vertical scanning direction; wherein the transport means, in accordance with the moving distance detected by the detection means, moves the image-reading unit in the vertical scanning direction so that the image-reading unit follows a rolling action of the object. With such configuration, the image can be sharpened even when the object is rolled.

### Advantageous Effects of Invention

For the above characteristics, the image reading device according to the present invention can sharpen obtained images and is able to be miniaturized while suppressing its cost.

### Brief Description of Drawings

[Fig. 1] It depicts a outline view showing an example of an image reading device according to a first exemplary embodiment of the present invention, (a) shows a perspective view and (b) shows a top view.
[Fig. 2] It depicts a cross-sectional view of the image reading device shown in Fig. 1.
[Fig. 3] It depicts a plan view of a CCD in Fig. 2 viewed from the direction of the arrow A in Fig. 2.
[Fig. 4] It depicts a block diagram showing an exemplary functional configuration of the image reading device shown in Fig. 1.
[Fig. 5] It depicts a flowchart for describing an operational sequence of the image reading device shown in Fig. 1.
[Fig. 6] It depicts a schematic explanatory diagram of sharpening of fingerprint images using a diffuser, (a) shows a condition where a ridge of a fingerprint is to be irradiated with light for obtaining an image, and (b) shows a condition where a valley of a fingerprint is to be irradiated with light for obtaining an image.
[Fig. 7] It depicts a schematic explanatory diagram of mirror disposition.
[Fig. 8] It depicts a schematic explanatory diagram of sharpening of fingerprint images when an angle of incidence and an angle of reflection are same, (a) shows a condition where a ridge of a fingerprint is to be irradiated with light for obtaining an image, and (b) shows a condition where a valley of a fingerprint is to be irradiated with light for obtaining an image.
[Fig. 9] It depicts a schematic explanatory diagram of an example of a fingerprint image acquired, (a) shows the fingerprint image acquired using the diffuser 5, and (b) shows the fingerprint image acquired without using the diffuser 5.
[Fig. 10] It depicts a outline view showing an example of an image reading device according to a second exemplary embodiment of the present invention, (a) shows a perspective view and (b) shows a top view.
[Fig. 11] It depicts a cross-sectional view of the image reading device shown in Fig. 10.
[Fig. 12] It depicts a plan view of a CCD in Fig. 11 viewed from the direction of the arrow A in Fig. 11.
[Fig. 13] It depicts an exemplary block diagram showing a functional configuration of the image reading device shown in Fig. 10.
[Fig. 14] It depicts a block diagram showing an exemplary configuration of coordinate detection means and movement detection means shown in Fig. 13.
[Fig. 15] It depicts a schematic diagram showing a method of detecting a finger pressing position.
[Fig. 16] It depicts a schematic diagram showing a method of calculating a moving distance of a movement to a starting position of reading.
[Fig. 17] It depicts a schematic diagram showing a method of detecting a moving distance of a finger.
[Fig. 18] It depicts a timing chart showing a method of classifying image data into valid data and invalid data.
[Fig. 19] It depicts a block diagram showing an exemplary configuration of image classification means shown in Fig. 10.
[Fig. 20] It depicts a block diagram showing an exemplary configuration of motor control means shown in Fig. 10.
[Fig. 21] It depicts a main flowchart showing an operational sequence of the image reading device shown in Fig. 10.
[Fig. 22] It depicts a schematic explanatory diagram showing position correction of a reading unit, (a) shows a state before correction, and (b) shows a state after correction.
[Fig. 23] It depicts a sub-flowchart showing an operational sequence of a reading termination process shown in Fig. 21.
[Fig. 24] It depicts a schematic diagrams showing a relationship between the rolling of the finger and a movement of the CCD.
[Fig. 25] It depicts an operational timing chart of the image reading device in Fig. 10, showing the operational timing that applies when the finger rested on a touch panel is rolled only in a normal turning direction.
[Fig. 26] It depicts another operational timing chart of the image reading device in Fig. 10, showing the operational timing that applies when the finger rested on the touch panel is rolled in a reverse turning direction.
[Fig. 27] It depicts a schematic diagrams showing a relationship between the reverse rolling of the finger and the movement of the CCD.
[Fig. 28] It depicts a schematic diagram showing another exemplary method of determining whether a moving distance of a finger pressing position reaches a line width.

### Description of Embodiments

Next, exemplary embodiments of the present invention are described in details referring to the accompanying drawings.

First, a first exemplary embodiment of the present invention is described. The first exemplary embodiment shows a case where an image reading device according to the present invention is applied to an image reading device for reading fingerprint images.

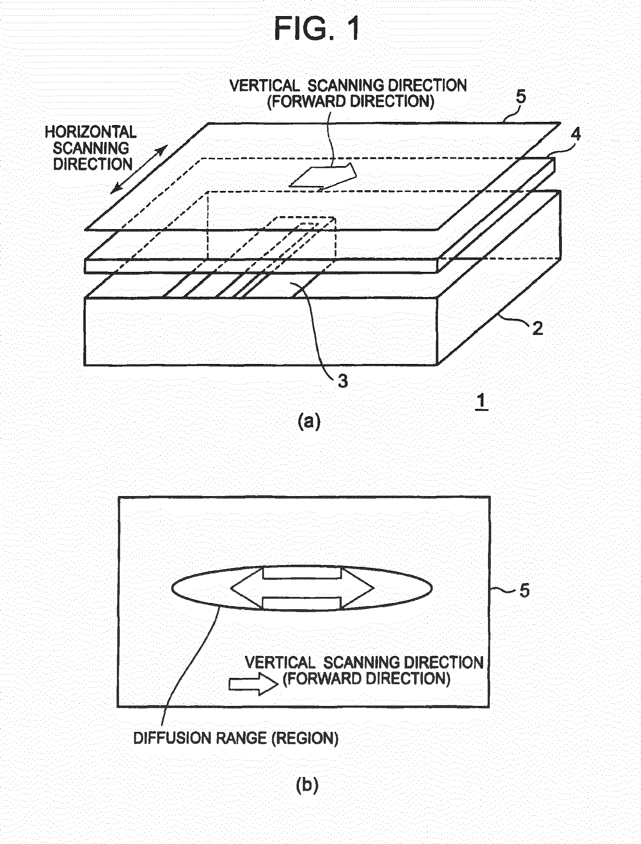

Fig 1 shows the first exemplary embodiment of the image reading device according to the present invention. As shown in Fig. 1 (a), the image reading device 1 includes a scanner frame 2; a reading unit 3 accommodated inside the scanner frame 2 and constructed movable in a vertical scanning direction of the reading unit 3 by motor driving; transparent platen glass 4 disposed on the scanner frame 2; and a diffuser 5 disposed on the platen glass 4. Although not shown, a slide rail is installed inside the scanner frame 2. The reading unit 3A is equipped with a gear that meshes with the slide rail and a motor that rotates the gear.

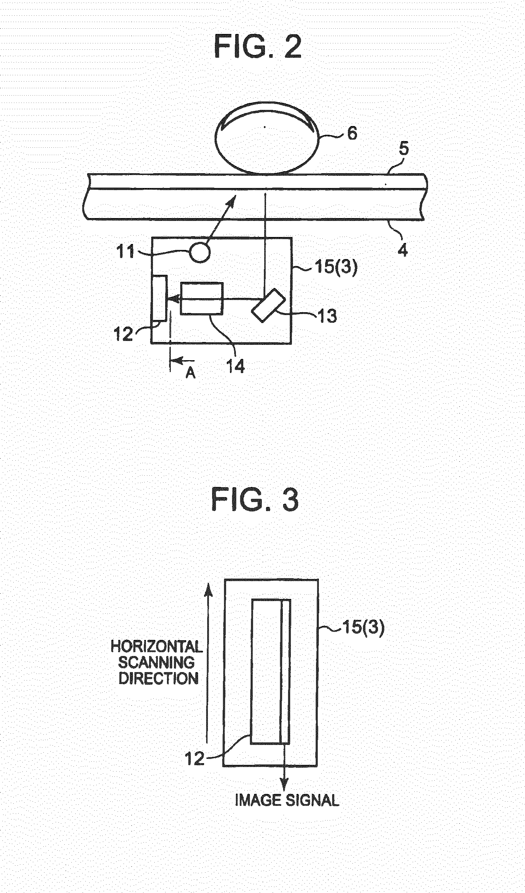

As shown in Fig. 1(b), the diffuser 5 is formed in a rectangular shape in a top view, and as shown in Fig. 2, it is used as a resting table for resting thereon a finger 6 which is the object of imaging. An example of the diffuser 5 is one that is formed from a glass or resin base material with one of its side treated to have a frosted-glass like surface (sand-surface), in order to diffuse light incident from the other surface.

The diffuser 5 is disposed in such a manner that the diffusion surface comes to the side on which a finger 6 is rested and the non-diffusion surface comes to the side where light emitted from a light source 11 (described later) enters. The diffuser 5 is also disposed to diffuse the incident light widely in the vertical scanning direction of the reading unit 3 and narrowly in the horizontal scanning direction. By disposing the diffuser 5 in such a way, a diffusion range (region) of the incident light can be formed, for example, in an elliptical shape having a major axis aligned to the vertical scanning direction of the reading unit. This allows the diffused the finger 6 to be efficiently irradiated with light. The form of the diffuser 5 is not limited to this example. For instance, a sheet-like or a film-like material can be used for the diffuser 5.

The platen glass 4 serves as a supporting table for the diffuser 5 when the finger 6 is rested thereon. The platen glass 4 is constructed of, for example, transparent glass having a strength higher than the diffuser 5.

As shown in Fig. 2, the reading unit 3 includes the light source 11 for irradiating the finger 6 rested on the diffuser 5 with light; a CCD (charge-coupled devices) 12 for acquiring images; a mirror 13 and an optical lens 14 for guiding fingerprint images of the finger 6 to a light-receiving surface of the CCD 12; and a unit enclosure 15 accommodating the light source 11, the CCD 12, the mirror 13, and the optical lens 14.

An irradiation angle of the light from the light source 11 is determined by a diffusion angle of the diffuser 5. The way of determining the irradiation angle of the light from the light source 11 is not limited to this and may instead be determined by conducting experiments. The CCD 12 is a one-dimensional CCD (line sensor) that captures images line-by-line and converts received light into an image signal, and then outputs the image signal. The CCD 12 is arranged to extend in the horizontal scanning direction as shown in Fig. 3. The mirror 13 receives a light reflected from the subject and reflects the light to the optical lens 14. A light-receiving angle of the mirror 13 may be determined based on experiments.

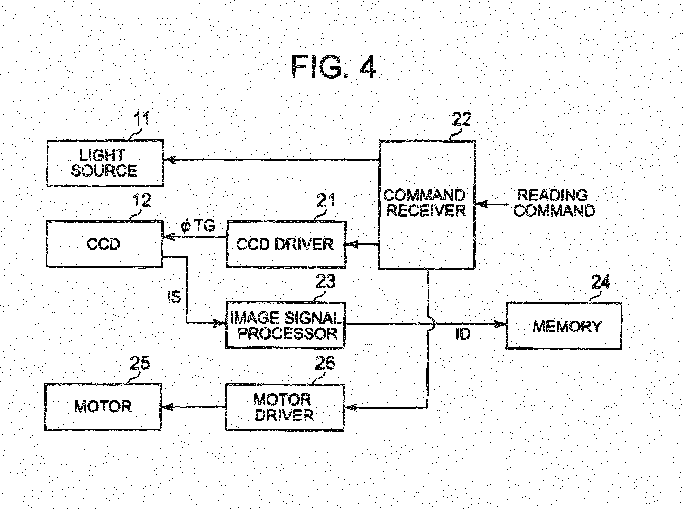

Fig. 4 is a block diagram showing a functional configuration of the image reading device 1. As shown in the figure, the image reading device 1 includes: the light source 11; the CCD 12; a CCD driver 21 for supplying an image output signal φTG to drive the CCD 12 and making the CCD 12 periodically output an image signal (analog signal) IS; a command receiver 22 for activating the light source 11 as well as giving instructions to the CCD driver 21 in response to reading commands (instructions) from the outside; an image signal processor 23 for conducting A/D (Analog/Digital) conversion or other predetermined signal processing upon the image signal IS output from the CCD 12; a memory 24 for storing the image signal data (digital signal) ID output from the image signal processor 23; a stepping motor (hereinafter, referred to simply as the motor) 25 for moving the reading unit 3 (see Fig. 1) in the vertical scanning direction; and a motor driver 26 for controlling the motor 25 in response to the instructions from the command receiver 22. These elements from the light source 11 to the motor driver 26 are all mounted in the reading unit 3 of the image reading device 1, shown in Fig. 1.

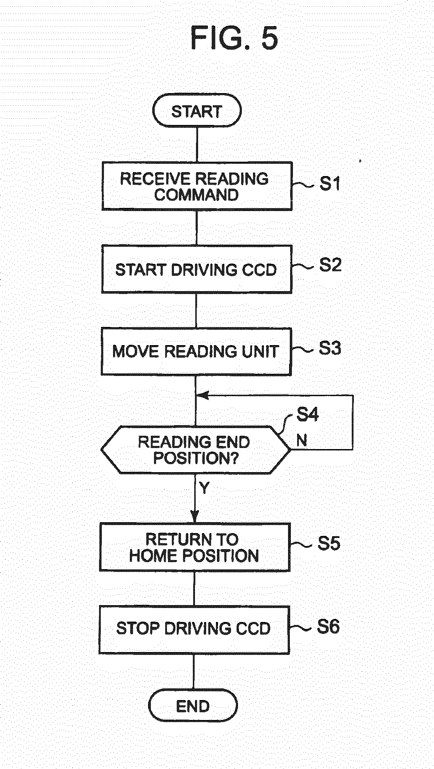

Next, an operational sequence of the image reading device 1 having the above configuration is described. Fig. 5 is a flowchart for describing the operation of the image reading device 1.

First, receiving a reading command from the outside (step S1), the image reading device 1 drives the CCD 12 and imaging is started by the CCD 12 (step S2).

Next, the image reading device 1 moves the reading unit 3 from its home position, a start position of the reading, to an end position of the reading (step S3), thereby capturing images on a line-by-line basis. The thus obtained image signal IS is then supplied to the image signal processor 23 where a predetermined signal processing such as A/D conversion is performed. After the processing, the data is sequentially written into the memory 24 as image data ID and stored therein.

The image reading device 1 next determines whether the reading unit 3 has reached the reading end position (step S4). When the reading unit 3 is determined to have reached the reading end position (step S4: Y), the image reading device 1 terminates the reading operation. The reading unit 3 returns to the home position and driving the CCD 12 is stopped (steps S5, S6).

On the other hand, when the reading unit 3 is determined in the step S4 to have not reached the reading end position (step S4: N), the step 4 will be repeated until the reading unit 3 reaches the reading end position.

Upon completion of the reading operation, the image reading device 1 connects together the plurality of sets of line-by-line image data stored within the memory 24, thus obtaining one fingerprint image. The connecting of these sets of image data ID does not require an advanced data editing such as image combining but can be done by only reading out the image data ID stored within the memory 24 in the order they were stored.

The manner of sharpening fingerprint images with use of the diffuser 5 is described below. When the finger 6 is rested on the diffuser 5, only ridges (raised portions) of the fingerprint contacts with the diffuser 5 and valleys thereof would not contact. When a light is emitted from a reverse side of the diffuser 5 in such state, the amount of light reflected from the finger 6 differs between the ridges and the valleys. With regard to this, the first exemplary embodiment is adapted to sharpen the contrast between the ridges and the valleys of a fingerprint by using the diffuser 5, based on the amount of light reflected by the finger 6. The sharpening of fingerprint images can thus be achieved.

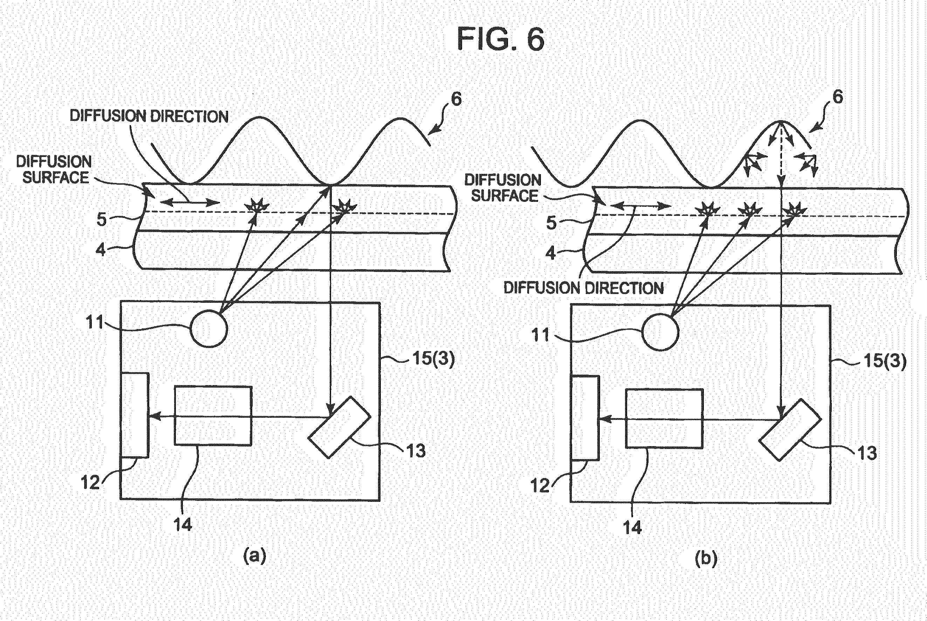

Fig. 6 is an explanatory diagrams for sharpening of fingerprint images using the diffuser 5. Fig. 6(a) shows a schematic view of when the ridges of a fingerprint is irradiated with light, and Fig. 6(b) shows a schematic vies of when the valleys of a fingerprint is irradiated with light in order to obtain images.

When ridges of a fingerprint are to be imaged, as shown in Fig. 6(a), light emitted from the light source 11 penetrates the platen glass 4 and enters the diffuser 5. At this time, the light incident upon the diffuser 5 diffuses at the diffusion surface along a diffusion direction. However, since ridges of the fingerprint are in contact with the diffuser 5, the ridge cannot be efficiently irradiated with the light. The light that has reached the ridges of the fingerprint are reflected in smaller quantities than the light emitted from the light source 11. The light reflected from the ridges of the fingerprint transmits the diffuser 5 and the platen glass 4 to enter the mirror 13, and then is received by the light-receiving surface of the CCD 12 via the optical lens 14.

As mentioned, since the ridge of the fingerprint is in contact with the diffuser 5, the image reading device 1 cannot efficiently irradiate the ridges with the light emitted from the light source 11 and diffused by the diffuser 5. The amount of reflected light entering the mirror 13 is therefore reduced. The image which is acquired in correspondence with the amount of reflected light received by the CCD 12 will consequently become a dark image.

On the other hand, when valleys of a fingerprint are to be imaged as shown in Fig. 6(b), light emitted from the light source 11 transmits the platen glass 4 and is diffused by the diffusion surface along the diffusion direction. At this time, the valley of the fingerprint is not in contact with the diffuser 5, so the diffused light transmits the diffuser 5 and reaches the valleys of the fingerprint. In addition, the light emitted from the light source 11 to the areas wide in the vertical scanning direction between the ridges of the fingerprint where the fingerprint does not contact with the diffuser 5 is diffused by the diffuser 5, and then reaches the valleys.

The light that has reached the valleys of the fingerprint is reflected to enter the diffuser 5, whereby being more diffused by the diffusion surface. The reflected light then passes through the platen glass 4, enters the mirror 13, and is received by the light-receiving surface of the CCD 12 via the optical lens 14. In addition, light reflected from the periphery of the reading position around the spaces between the valleys of the fingerprint and the diffuser 5 is also efficiently diffused by the diffusion surface of the diffuser 5. The reflected light is received by the light-receiving surface of the CCD 12 via the platen glass 4, the mirror 13, and the optical lens 14.

As mentioned, the valleys of the fingerprint do not directly contact with the diffuser 5. The light emitted from the light source 11 to the wide areas between the ridges of the fingerprint where the fingerprint does not contact with the diffuser 5 is diffused by the diffuser 5, and then reaches the valleys. The valleys of the fingerprint can therefore be irradiated more efficiently than the ridges. In addition, at the time the reflected light from the valleys of the fingerprint is diffused by the diffusion surface of the diffuser 5, the light reflected from the periphery of the reading position of the spaces between the valleys and the diffuser 5 is also efficiently diffused by the diffusion surface of the diffuser 5. The amount of reflected light entering the mirror 13 is thus larger than that of the ridges of the fingerprint. As a result, an image formed by the light received in the CCD 12 becomes a bright image compared with an image of ridges formed by light irradiation.

As described above, the amount of reflected light incident upon the mirror 13 differs between the ridges of the fingerprint and the valleys. This sharpens the contrast between ridges and valleys of a fingerprint, resulting in sharpening of the fingerprint image.

Incidentally, for example, if the diffuser 5 is disposed in such a manner that the diffusion surface thereof faces the reading unit 3, light emitted from the light source 11 would diffuse at a boundary surface between the platen glass 4 and the diffuser 5. In this case, the ridge and valley of the fingerprint are irradiated with a similar light (diffused light). The reflected light from the ridges and the valleys of the fingerprint is further diffused by the diffusion surface of the diffuser 5 and then enters the mirror 13. Therefore, the difference in the amount of reflected light received by the CCD 12 between the ridges and the valleys of the fingerprint would be the same as that obtained by a device that does not use the diffuser 5. The fingerprint images cannot be sharpened.

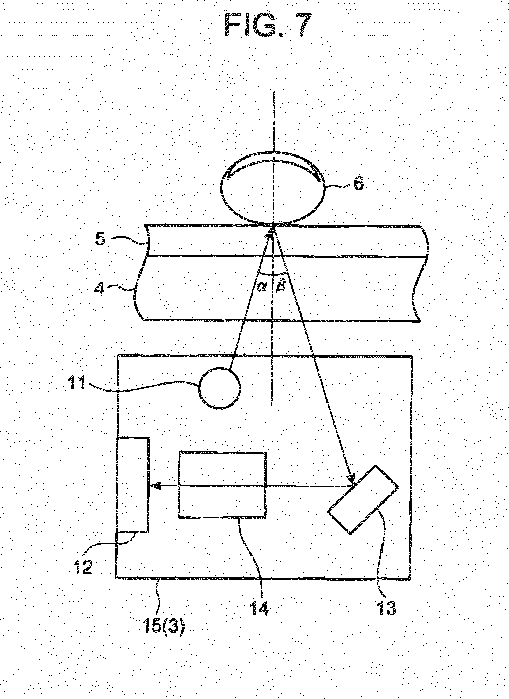

To acquire fingerprint images with use of the above described configuration, for example, the mirror 13 may be disposed such that the incident angle and the reflection angle with respect to the finger 6 are the same as shown in Fig. 7. This enables the reflection waves of the light emitted from the light source 11 upon the finger 6 to efficiently enter the mirror 13, thereby sharpening the fingerprint image.

For example, let an angle formed between a light emitted from the light source 11 to the finger 6 and a perpendicular line drawn from the finger 6 at right angles to the diffuser 5 be the angle of incidence, a. Let an angle formed between a light reflected from the finger 6 that enters the mirror 13 and the perpendicular line drawn from the finger 6 be the angle of reflection, β. In this case, the mirror 13 has its position and angle determined so that the incidence angle α and the reflection angle β are equal to each other.

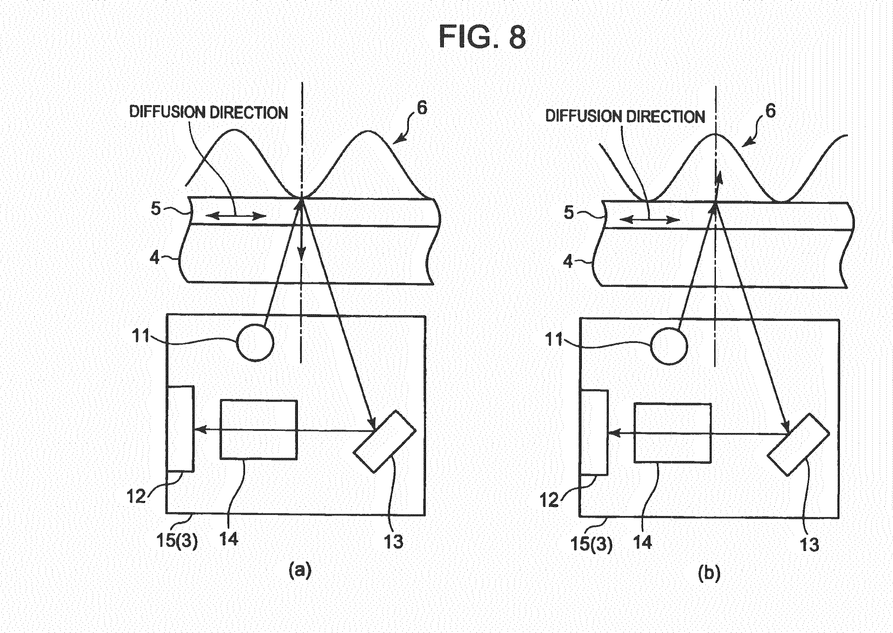

Fig. 8 shows the case where the mirror 13 is disposed so that the incidence angle α and the reflection angle β are equal to each other. Fig. 8(a) illustrates a condition of when a ridge of a fingerprint is irradiated with light for imaging, and Fig. 8(b) is an illustration showing irradiation with light of a valley of a fingerprint. In Fig. 8, of all the light diffused by the diffuser 5, only the light traveling linearly is shown for ease of description.

When the ridge of the fingerprint is to be imaged, as shown in Fig. 8(a), the light emitted from the light source 11 reaches the ridge at a predetermined angle of incidence via the platen glass 4 and the diffuser 5. At this time, since the ridge of the fingerprint is in contact with the diffuser 5, the light incident upon the diffuser 5 substantially does not diffuse at the diffusion surface. The light will be directly reflected, and a part of the light is reflected at an angle equal to the incidence angle (direct reflected light). The direct reflected light from the ridge of the fingerprint transmits the diffuser 5 and the platen glass 4, enters the mirror 13, and is received by the light-receiving surface of the CCD 12 via the optical lens 14.

The direct reflected light that enters the mirror 13 is only a part of the light reflected from the ridge of the fingerprint, so the amount of light is smaller than that of the light emitted from the light source 11. The image to be acquired in correspondence with the light received by the CCD 12 will therefore become a dark image.

On the other hand, when the valley of the fingerprint is to be imaged as shown in Fig. 8(b), the light emitted from the light source 11 passes through the platen glass 4 and the diffuser 5 and then reaches the surface of the diffuser 5 at a predetermined angle of incidence. The valley of the fingerprint does not contact with the diffuser 5 and a space exists between the valley of the fingerprint and the diffuser 5. Therefore, although a part of the light from the light source 11 transmits through the diffuser 5, the rest of the light is reflected at an angle equal to the incidence angle (direct reflected light). The direct reflected light reflected on the surface of the diffuser 5 transmits the diffuser 5 and the platen glass 4, enters the mirror 13, and is received by the light-receiving surface of the CCD 12 via the optical lens 14.

The amount of direct reflected light that enters the mirror 13 is large relative to that of the light directly reflected from the ridge of the fingerprint. The image formed by the light received in the CCD 12 will therefore be a bright image compared with the image of the ridge obtained by light irradiation.

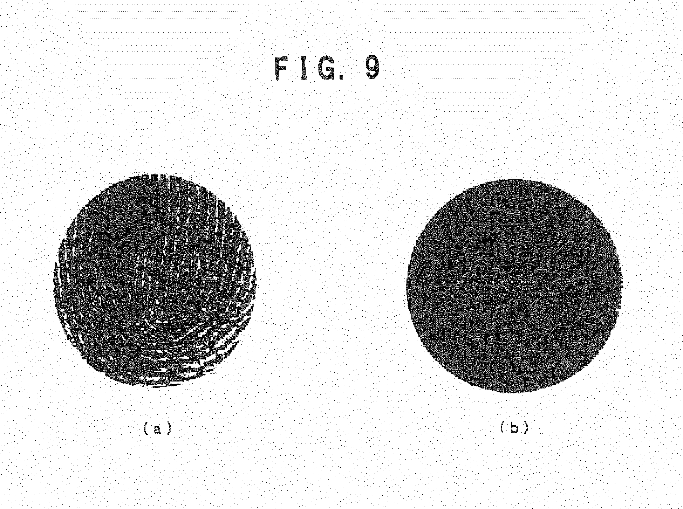

Fig. 9 shows examples of fingerprint images acquired by different methods. Fig. 9(a) shows a fingerprint image obtained by using the diffuser 5, and Fig. 9(b) shows a fingerprint image obtained without the diffuser 5. Compared to the image shown in Fig. 9(b) not using the diffuser 5, the image shown in Fig. 9(a) obtained with use of the diffuser 5 has a sharper contrast between the ridges and the valleys of the fingerprint, which enables the fingerprint image to be sharpened and clear.

While the first exemplary embodiment was configured to receive the reflected light from the mirror 13 with the CCD 12, the configuration is not limit to this. For example, the CCD 12 may be located at the position of the mirror 13 so that the CCD 12 directly receives the reflected light from an object not via the mirror 13. In this case, a position of the CCD 12 and an angle of the light-receiving surface will be determined in a manner similar to that taken upon determining of the position and the angle of the mirror 13.

As described above, according to the first exemplary embodiment, sharp and clear fingerprint images can be obtained because the fingerprint images are produced by diffusing a light emitted from the light source with the diffuser. In addition, the first exemplary embodiment uses the diffuser to sharpen fingerprint images, instead of special optical components such as a prism lens or an optical-fiber plate. The device can therefore be reduced in size and the cost can also be suppressed.

Further, in the first exemplary embodiment, one fingerprint image is acquired by merely connecting together a plurality of sets of line-by-line image data acquired using a line sensor. This eliminates the need for advanced image combining, prevents signal-processing circuits and software from getting complicated, whereby reducing the cost of the device.

Next, a second exemplary embodiment of the present invention is described. The second exemplary embodiment relates to an example in which an object to be imaged is rolled. In order to avoid intricate description, elements common to those of the first exemplary embodiment are each assigned the same reference number or symbol and their detailed descriptions are omitted.

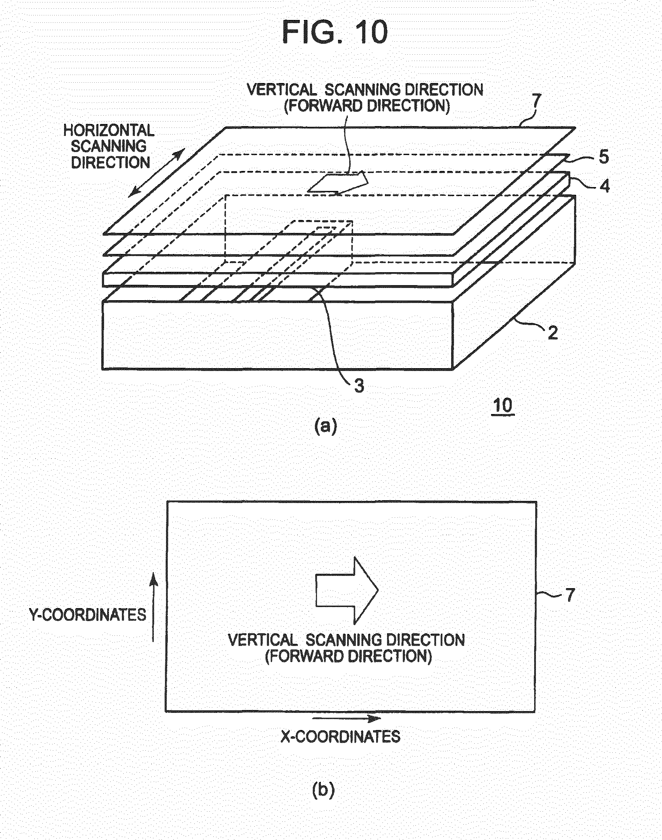

Fig. 10 shows an image reading device according to the second exemplary embodiment of the present invention. As shown in Fig. 10(a), the image reading device 10 includes a scanner frame 2; a reading unit 3; platen glass 4; a diffuser 5; and a transparent touch panel 7 attached onto the diffuser 5.

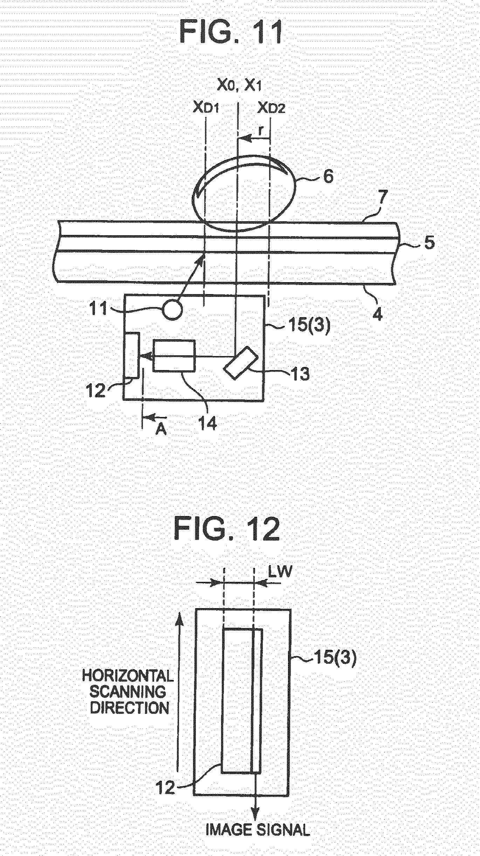

As shown in Fig. 10(b), the touch panel 7 is formed in a rectangular shape in a top view, and as shown in Fig. 11, the touch panel 7 is used as a resting table on which a finger 6 to be imaged is rested. On the touch panel 7, as shown in 10A, the longitudinal direction (horizontal scanning direction) is defined as a Y-axis (Y-coordinate) and the lateral direction (vertical scanning direction) is defined as a X-axis (X-coordinate). A position of the finger 6 on the touch panel 7 is output as coordinate information. Incidentally, various types of touch panels exist, including a resistive-film type, a capacitive type, and an optical type. The touch panel 7 can be of any of those various types.

Referring to Fig. 11, the reading unit 3 includes a light source 11; charge-coupled devices (CCD) 12; a mirror 13; an optical lens 14; and a unit enclosure 15. As shown in Fig. 12, the line width LW of a light-receiving surface of the CCD 12 is greater than a width of one X-coordinate scale of the touch panel 7.

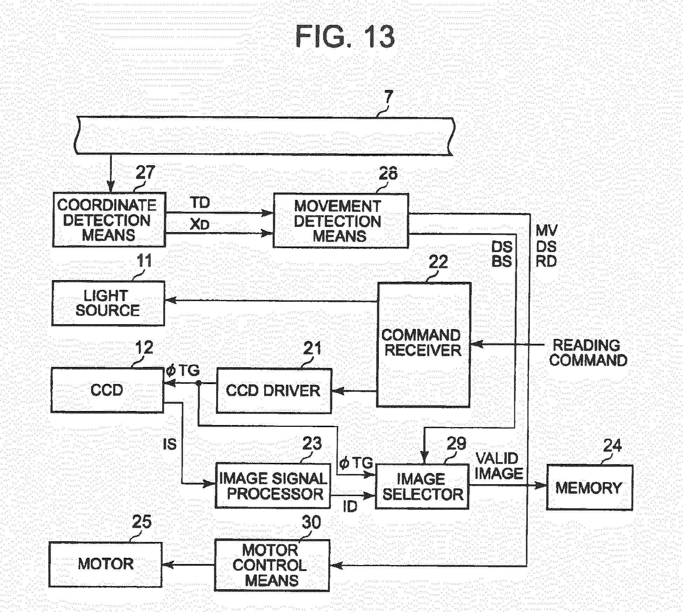

Fig. 13 is a block diagram showing a functional configuration of the image reading device 10. As shown in the figure, the image reading device 10 includes: coordinate detection means 27 for detecting a position of the finger 6 on the touch panel 7; movement detection means 28 for detecting a moving distance of the finger 6 on the basis of detection results obtained by the coordinate detection means 27, and then outputting a movement detection signal DS; the light source 11; the CCD 12; a CCD driver 21; a command receiver 22; an image signal processor 23; image classification means 29 for classifying, in accordance with the movement detection signal DS from the coordinate detection means 27 and an image output signal φTG from the CCD driver 21, image data ID output from the image signal processor 23 into valid image data and invalid image data; a memory 24 for storing the valid image data output from the image classification means 29; a motor 25; and motor controlling means 30 for controlling the motor 25. These elements from the coordinate detection means 27 to the motor control means 30 are all installed inside the reading unit 3 shown in Fig. 10.

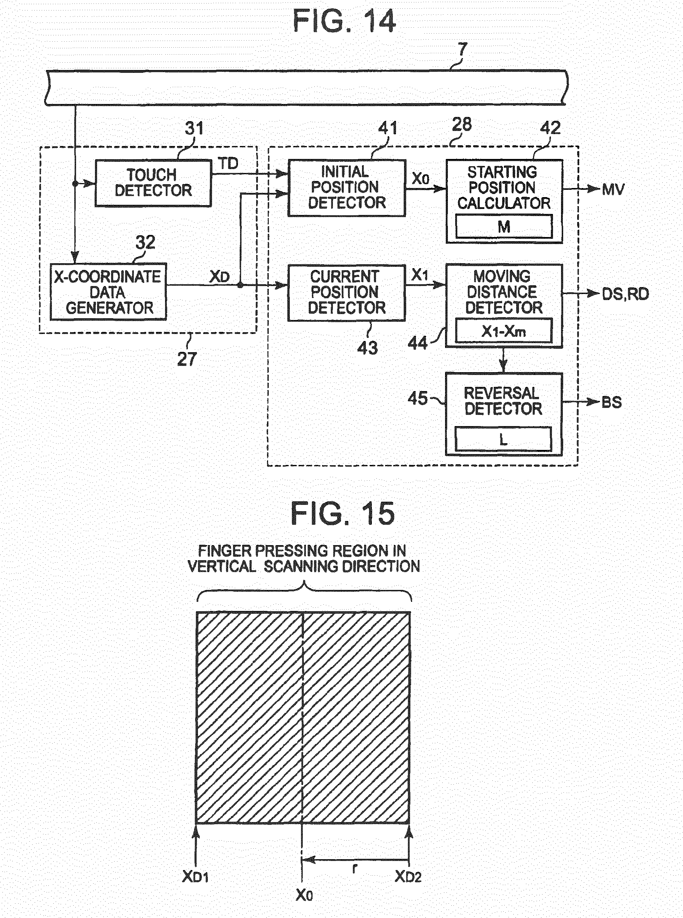

As shown in Fig. 14, the coordinate detection means 27 includes a touch detector 31 that detects whether the finger 6 is rested on the touch panel 7 with response to an output from the touch panel 7 and then outputs a touch detection signal TD. The coordinate detection means 27 also includes an X-coordinate data generator 32 that generates X-coordinate data X_{D} by converting the analog X-coordinate signal output from the touch panel 7 (i.e., a signal indicating an X-coordinate direction region of a region on which the finger 6 has touched or pressed the touch panel 7).

The movement detection means 28 includes an initial position detector 41; a start position calculator 42; a current position detector 43; a moving distance detector 4; and a reversal detector 45.

Based on the touch detection signal TD from the touch detector 31 and the X-coordinate data X_{D} from the X-coordinate data generator 32, the initial position detector 41 detects the position where the finger 6 first touched the touch panel 7 (the position where a subject person first rested the finger 6). Initial position data X₀ representing the X-coordinate data of the detected position is then output.

As shown in Fig. 15, the range of the region pressed by the finger 6 in the vertical scanning direction (X-coordinate direction) is much wider than one X-coordinate scale of the touch panel 7. Therefore, the X-coordinate data X_{D} given from the X-coordinate data generator 32 to the initial position detector 41 will be a value representing a plurality of scales included between X-coordinate data X_{D1} of the left end and X-coordinate data X_{D2} of the right end. The initial position detector 41 corrects the coordinate data by subtracting a predetermined amount "r" from the X-coordinate data X_{D2} in a direction towards a central portion of the finger 6, or by adding the predetermined amount "r" to the X-coordinate data X_{D1} in the direction towards the central portion of the finger 6. The initial position detector 41 acknowledges the corrected data as the position the finger 6 has pressed, and defines the data as the initial position data X₀.

This correcting function does not need to be mounted in the initial position detector 41. The correcting function may instead be mounted in the X-coordinate data generator 32 of the coordinate detection means 27. The coordinate correction is unnecessary if the touch panel 7 is originally adapted to output coordinate information of only one point, for example, an intermediate value between the X-coordinate at the left end of the finger pressing or touching region and the X-coordinate at the right end.

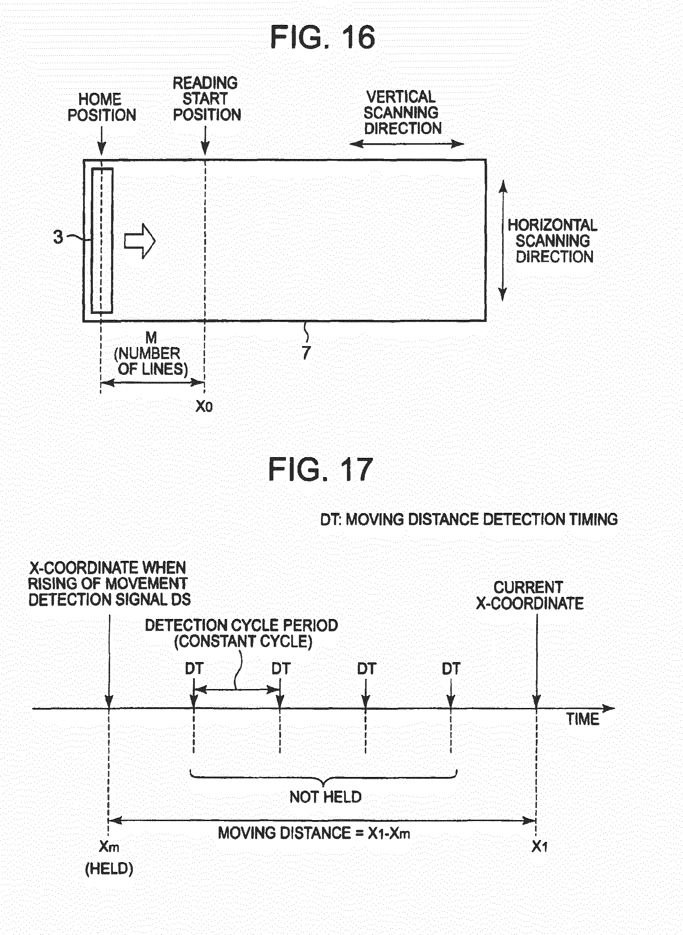

As shown in Fig. 16, the start position calculator 42 calculates a moving distance M of the reading unit 3 from its home position to a reading start position by using the initial position data X₀ output from the initial position detector 41. The calculated data is output from the start position calculator 42 as an initial driving value MV representing the moving distance M. The start position calculator 42 is stored in advance with information that indicates how many X-coordinate scales on the touch panel 7 corresponds with the line width LW of the CCD 12.

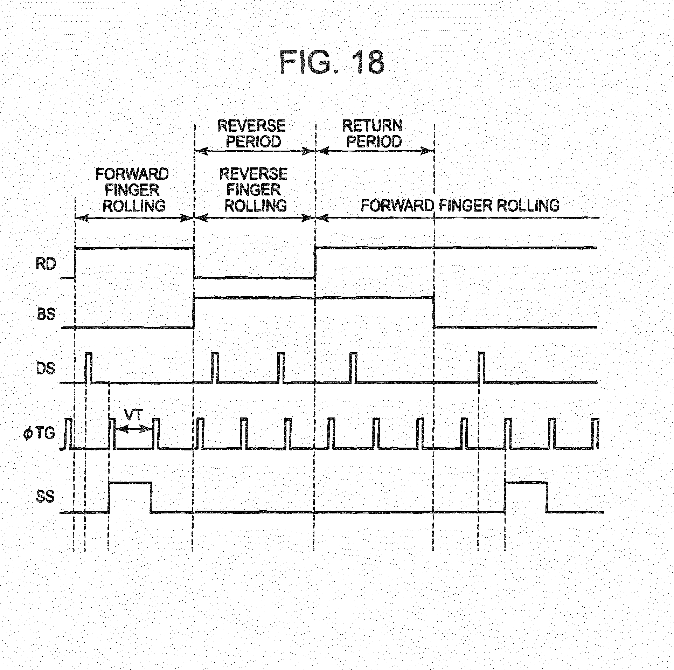

The current position detector 43 uses the X-coordinate data XD sent from the X-coordinate data generator 32 to output current position X-coordinate data Xᵢ representing the position where the finger 6 is pressing at that time. As with the initial position detector 41 shown in Fig. 15, the current position detector 43 corrects coordinate data by subtracting the predetermined amount "r" from the X-coordinate data X_{D2} in the direction pointing towards the central portion of the finger 6, or by adding the predetermined amount "r" from the X-coordinate data X_{D1} in the direction pointing towards the central portion of the finger 6. The corrected value is then acknowledged as the pressing position of the finger 6 and is defined as the current position X-coordinate data Xᵢ. Detection of the current position X-coordinate data Xᵢ is performed at a constant cycle, and one period of the cycle is set to be shorter than a period of an image signal output cycle VT (see Fig. 18) of the CCD 12.

The moving distance detector 44 uses the current position X-coordinate data Xᵢ sent from the current position detector 43 to determine whether a moving distance of the touching position of the finger 6 has reached the line width LW (see Fig. 12) of the CCD 12. According to the determination result, the movement detection signal DS is output.

As shown in Fig. 17, the moving distance detector 44 holds X-coordinate data Xₘ (described later) obtained at the time the movement detection signal DS was previously raised. The moving distance detector 44 calculates the moving distance (Xᵢ-Xₘ) of the finger 6 by subtracting the held X-coordinate data Xₘ from the current position X-coordinate data Xᵢ. The moving distance detector 44 next determines whether the calculated moving distance (Xᵢ-Xₘ) reaches (is equal to or longer than) a length equivalent to the line width LW of the CCD 12. When the moving distance reaches the line width LW, the moving distance detector 44 raises the movement detection signal DS to a high level (Hi) as shown in Fig. 18. The moving distance detector 44 is also stored in advance with the information indicating the number of X-coordinate scales of the touch panel 7 that corresponds with the line width LW of the CCD 12.

Further, the moving distance detector 44 determines a moving direction of the finger 6 (i.e., whether the moving is a normal rolling or a reverse rolling in the vertical scanning direction), and outputs a direction signal RD representing the moving direction. When the moving direction of the finger 6 is normal, the direction signal RD rises to a Hi level. When the moving direction of the finger 6 is reverse, the direction signal RD falls to a Low level. The determination of the finger 6 moving direction can be done by using the calculated moving distance (Xᵢ-Xₘ) mentioned above. The moving distance detector 44 determines the moving a normal rolling when the moving distance (Xᵢ-Xₘ) is a positive value, and determines it as a reverse rolling when the moving distance is a negative value.

The reversal detector 45 is provided to control the operation of the device during a reverse movement of the finger 6. The reversal detector 45 uses the direction signal RD and moving distance (Xᵢ-Xₘ) data sent from the moving distance detector 44 to manage a value L representing a reverse moving distance of the finger 6 (a value of the moving distance in the reverse direction expressed in a number of lines). The reversal detector 45 also generates a backing (reversal)-returning signal BS according to the reverse moving distance L.

The backing-returning signal BS is a signal that indicates a backing (reversing) time period during which the finger 6 moves in the reverse direction, and a returning time period during which the finger 6 starts returning from the reversal movement and reaches a reverse start position (a position at which the rolling of the finger 6 has changed from the forward direction to the reverse direction). As shown in Fig. 18, the backing-returning signal BS is kept at a Hi level from the time the finger 6 starts to reverse from a normal movement until the finger 6 returns to its initial position.

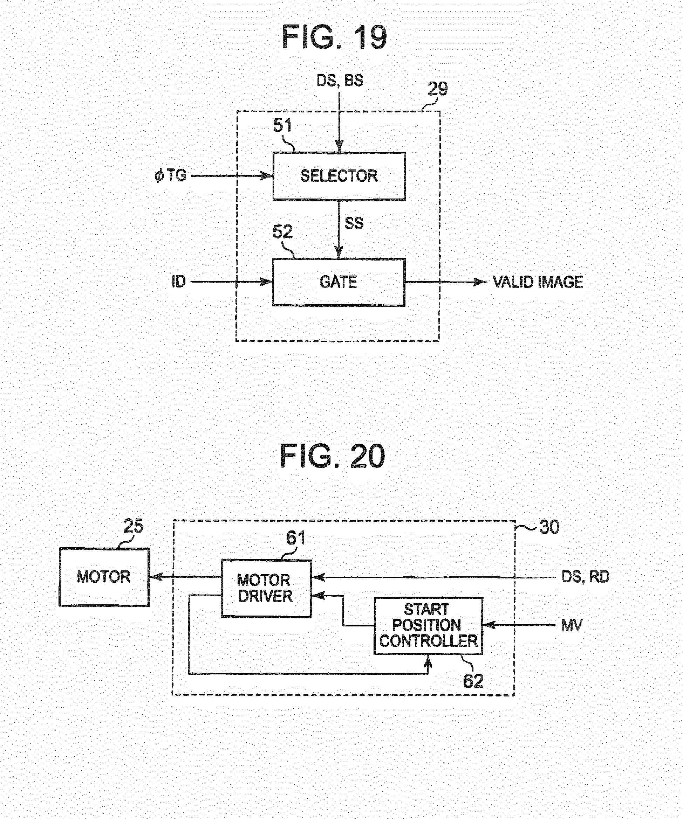

Referring to Fig. 13 again, the image classification means 29 includes, as shown in Fig. 19, a selector 51 that receives the movement detection signal DS from the movement detection means 28, the backing-returning signal BS from the reversal detector 4, and the image output signal φTG from the CCD driver 21, and then outputs an image selection signal SS; and a gate 52 that uses the image selection signal SS from the selector 51 to classify the image data ID into valid image data and invalid image data.

As shown in Fig. 18, during a period where the backing-returning signal BS is kept at the Low-level, the selector 51 refers to the movement detection signal DS and the image output signal φTG. In response to a rise of the image output signal φTG immediately following the rise of the movement detection signal DS to the Hi level, the selector 51 raises the image selection signal SS to a Hi level. The image selection signal SS is kept at the Hi-level for one period of the image output signal cycle VT of the CCD 12. The Hi-level period of the image selection signal SS here corresponds to a period during which the image data ID is determined to be valid, and a Low-level period of the image selection signal SS corresponds to a period during which the image data ID is determined to be invalid.

On the other hand, during the Hi-level period of the backing-returning signal BS, the selector 51 keeps the image selection signal SS at the Low level irrespective of the movement detection signal DS and the image output signal φTG.

During the Hi-level period of the image selection signal SS, the gate 52 receives the image data ID output from the image signal processor 23 and transfers the image data as valid images into the memory 24 of the subsequent stage. During the Low-level period of the image selection signal SS, the gate 52 discards the image data ID as invalid images. The gate 52 can be composed of an AND circuit for example.

Referring to Fig. 13 again, the motor control means 30 includes, as shown in Fig. 20, a motor driver 61 for driving the motor 25 in response to the movement detection signal DS sent from the movement detection means 28; and a start position controller 62 for controlling the movement of the CCD 12 to the reading start position (reading unit 3).

When the movement detection signal DS output from the moving distance detector 44 rises to the Hi level, the motor driver 61 drives the motor 25 to move the CCD 12 (reading unit 3) through a distance equivalent to the line width LW in the vertical scanning direction. In addition, when the direction signal DS from the moving distance detector 44 indicates the forward direction, the motor driver 61 rotates the motor 25 in a forward direction (the rotational direction that moves the CCD 12 in the forward direction), and when the direction signal DS indicates the reverse direction, the motor driver 61 rotates the motor 25 in a reverse direction.

The start position controller 62 is used to move the CCD 12 from the home position to the reading start position (see Fig. 16). The start position controller 62 compares the initial driving value MV (see Fig. 14) output from the movement detection means 28 with a motor driving amount (the number of lines through which the CCD 12 moved). The starting position controller 62 continues to give instruction to the motor driver 61 to drive the motor 25 until the two values match.

It is not to mention that not the whole configuration described above referring to Figs. 13 to 20 need to be implemented with hardware and a part of the configuration may be implemented with software.

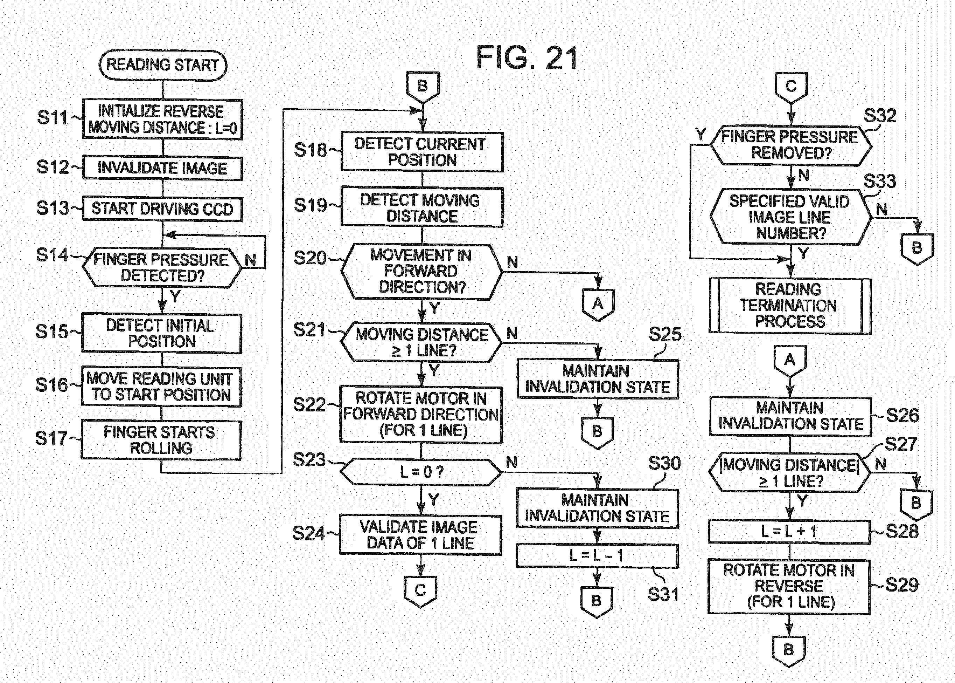

Next, operation of the image reading device 10 having the above configuration is described. An operational sequence of the fingerprint reading is first described referring mainly to Figs. 21 to 24.

As shown in Fig. 21, upon receiving a reading command from the outside, the reversal detector 45 (see Fig. 14) first initializes the reverse moving distance (number of lines L to "L=0" (step S11). The selector 51 (see Fig. 19) turns down the image selection signal SS to the Low level and sets up an invalidation state against image data ID (step S12).

Next, the image reading device 10 starts driving the CCD 12 (step S13) and waits for the finger 6 to be rested on the touch panel 7 (step S14). When the finger 6 is rested upon the touch panel 7 and the touch detector 31 (see Fig. 14) detects the touching, the initial position detector 41 responds to the detection and generates the initial position data X₀ which represents an initial position of the finger 6 (step S15).

Next, the start position calculator 42 (see Fig. 14) calculates the moving distance M (see Fig. 16) of the reading unit 3 from its home position to the reading start position. The start position controller 62 (see Fig. 20) then moves the reading unit 3 to the reading start position (step S16).

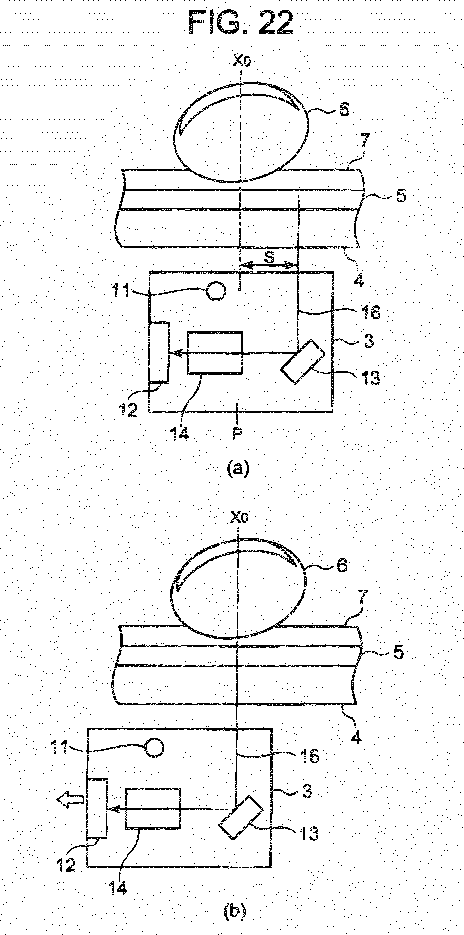

Referring to Fig. 22 (a), for example, it is assumed that the reading unit 3 is controlled in position by setting a central portion of the reading unit 3 as a reference position P. In this case, although it depends on the arrangement of the mirror 13 and the optical lens 14, the reading unit 3 may be moved from the home position to the reading start position, and set at that position, with a deviation between the initial position X₀ of the finger 6 and an optical axis 16 of the mirror 13 and optical lens 14.

In order to correct the deviation, the motor driver 61 may adjust the reading unit 3 after the reading unit 3 is moved to the reading start position, as shown in Fig. 22 (b). By moving the reading unit 3 backwards for a small amount of distance equivalent to the positional shift "s" between the optical axis 16 and the initial position X₀, the deviation can be corrected. Alternatively, the start position calculator 42 may subtract the shift "s" from the calculated moving distance M shown in Fig. 16 (M-s), and define the initial driving value MV on the basis of the calculated value.

The above correction processes are unnecessary if the device is originally configured to prevent the misalignment from occurring, as in a case where the reference position P of the reading unit 3 is originally set to align with the optical axis 16.

Referring to Fig. 21 again, when the subject starts rolling his or her finger 6 (step S17), the current position detector 43 (see Fig. 14) generates the current position X-coordinate data Xᵢ representing the current pressing position of the finger 6 (step S18). As described earlier, the detection of the current position X-coordinate data Xᵢ is performed at a constant cycle, and one period of the cycle is set to be shorter than that of the image signal IS output cycle VT (see Fig. 18) of the CCD 12.

Next, the moving distance detector 44 (see Fig. 14) calculates the moving distance (Xᵢ-Xₘ) of the finger 6. The moving distance detector 44 also generates the direction signal R_{D} indicating the moving direction of the finger 6 (step S19). Next, the moving distance detector 44 determines whether the moving direction of the finger 6 is normal or reverse (step S20). When the moving direction is normal (step S20: Y), the moving distance detector 44 determines whether the moving distance (Xᵢ-Xₘ) of the finger 6 reaches the line width LW (see Fig. 12) of the CCD 12 (step S21).

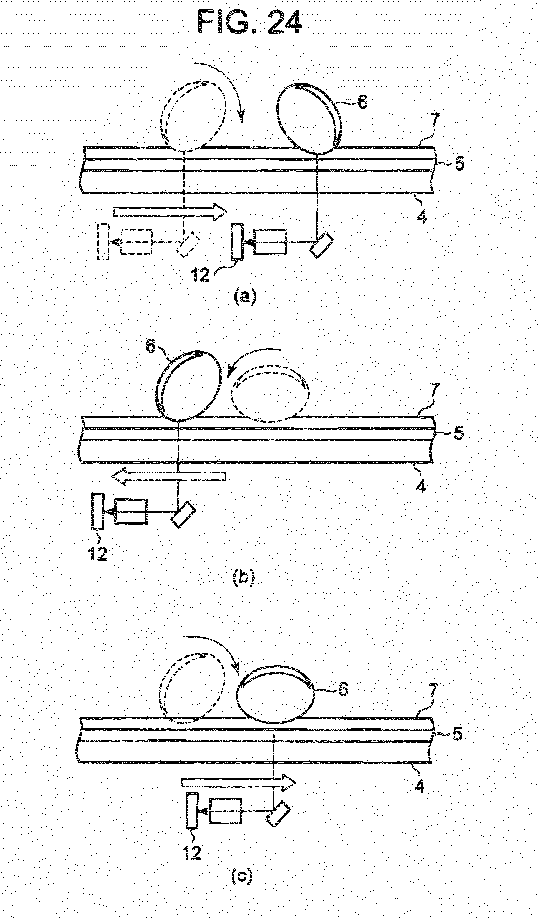

If the moving distance (Xᵢ-Xₘ) of the finger 6 is equal to or greater than the line width LW (step S20: Y), that is, if the movement detection signal DS is raised to the Hi level, this indicates that the pressing position of the finger 6 has moved through a distance equal to or greater than the line width LW in the normal rolling direction. The motor driver 61 (see Fig. 20) then drives the motor 25 to move the CCD 12 (reading unit 3) through a distance equivalent to the line width LW in the normal rolling direction (step S22). In such a manner, as shown in Fig. 24(a), the motor driver 61 moves the CCD 12 line by line in the normal rolling direction so as to follow the movement of the finger 6.

Referring to Fig. 21, step S23 is provided after step S22. Description of step S23 is omitted here for convenience' sake and will be given later.

In parallel to step S22, the selector 51 raises the image selection signal SS to the Hi level to validate image data ID output from the image signal processor 23 (step S24). As described earlier, the raising of the image selection signal SS is conducted in response to the rise of the image output signal φTG immediately following the rise of the movement detection signal DS to the Hi-level state. The Hi-level period of the image selection signal SS is held for one period of the image output signal cycle VT of the CCD 12, as shown in Fig. 18. Thus, image data ID of the one line is validated. The valid image data ID is output to the memory 24 through the gate 52 (see Fig. 19).

On the other hand, if the moving distance (Xᵢ-Xₘ) of the finger 6 is smaller than the line width LW (step S21: N), that is, if the movement detection signal DS is not raised, the selector 51 maintains a condition that invalidates image data ID (step S25). In other words, the image selection signal SS is maintained at the Low level.

Meanwhile, when the moving direction of the finger 6 is reverse (step S20: N), the selector 51 maintains the condition that invalidates image data ID (step S26) . The selector 51 also determines whether an absolute value of the finger 6 moving distance (Xᵢ-Xₘ) is equal to or greater than the line width LW (step S27).

When the absolute value of the finger 6 moving distance (Xᵢ-Xₘ) is smaller than the line width LW (step S27: N), process returns to step S18. Step S18 and the subsequent steps will be executed with response to a next detection timing of the current position X-coordinate data Xᵢ.

When the absolute value of the moving distance (Xᵢ-Xₘ) of the finger 6 is equal to or greater than the line width LW (step S27: Y), this indicates that the pressing position of the finger 6 has moved through a distance equal to or greater than the line width LW in the reverse rolling direction. The reversal detector 45 adds to the reverse moving distance L a value equivalent to one line (step S28). Additionally, the motor driver 61 counter rotates the motor 25 to move the CCD 12 through a distance equivalent to the line width LW in the reverse rolling direction (step S29).

After this, step S18 is executed in response to the arrival of the next detection timing of the current position X-coordinate data Xᵢ. Process moves to step S20, where the moving distance detector 44 determines whether the moving direction of the finger 6 is normal. If the finger 6 is continuing the reverse direction moving at this time (step S20: N), process skips to step S26 once again and steps from S26 to S29 are repeated. Thus, "1" is cumulatively added to the reverse moving distance L each time the absolute value of the finger 6 moving distance (Xᵢ-Xₘ) reaches the line width LW. In addition, each time the absolute value of the moving distance (Xᵢ-Xₘ) reaches the line width LW, the CCD 12 is moved line by line in the reverse rolling direction to follow the finger 6 movement, as shown in Fig. 24(b).

If it is determined in step S20 that the movement of the finger 6 has changed to the normal rolling direction (step S20: Y), process moves to step S21. The moving distance detector 44 then determines whether the moving distance (Xᵢ-Xₘ) of the finger 6 has reached the line width LW. When the moving distance of the finger 6 in the normal rolling direction (the moving distance of the finger 6 in the direction for returning to the start position of reversal) is equal to or greater than the line width LW (step S21: Y), the motor driver 61 rotates the motor 25 in its forward direction to return the CCD 12 through one line in the formal rolling direction (step S22).

Next, the reversal detector 45 determines whether the reverse moving distance L is "0" (step S23). This process is for confirming whether the CCD 12 have returned to the reverse start position of the finger 6. If the reverse moving distance L is not "0" (step S23: N), that is, if the CCD 12 have not yet returned to the start position of reversal, the reversal detector 45 maintains the invalidation mode against the image data ID (step S30) and subtracts "1" from the reverse moving distance L which is retained by the reversal detector 45 itself (step S31). The step of subtracting "1" from the reverse moving distance L is a process corresponding to step S22 in which the CCD 12 returned through one line in the normal rolling direction.

Above processes are repeated until the reverse moving distance L equals "0". As shown in Fig. 24(c), the start position controller 62 moves the CCD 12 line-by-line in the normal rolling direction so that the CCD 12 follows the returning of the finger 6 to the reverse start position. When the reverse moving distance L equals "0", that is, when the CCD 12 have returned to the reverse start position of the finger 6 (step S23: Y), process advances to step S24. The start position controller 62 then intermittently moves the CCD 12 in steps of one line in the normal rolling direction while appropriately validating image data ID.

After that, steps S18 to S31 are repeated until the finger 6 leaves the touch panel 7 or the number of obtained image data ID lines reaches a specified valid image line number (steps S32, S33). That is to say, a rolled fingerprint image of the finger 6 is obtained from one lateral side thereof to another lateral side in units of one line. Incidentally, the specified valid image line number is preset with allowance for various sizes of rolled fingerprint images of people. The estimated sizes of the rolled fingerprint images are converted into a number of lines and digitized into an equivalent value.

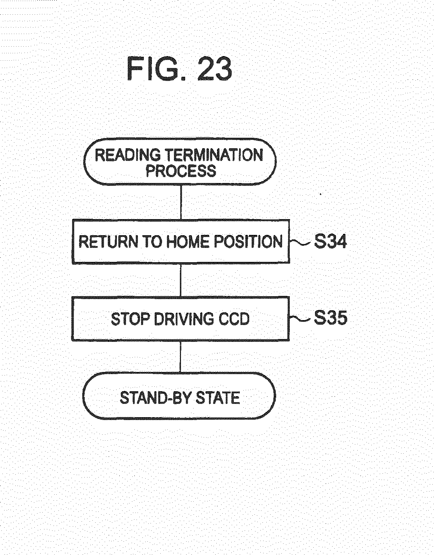

When the finger 6 leaves from the touch panel 7 or the number of obtained image data ID lines equals the specified valid image line number (step S32: Y or step S33: Y), the CCD 12 ends the reading operation. As shown in Fig. 23, the CCD driver 21 then returns the CCD 12 to the home position and stops driving the CCD 12 (step S34, S35).

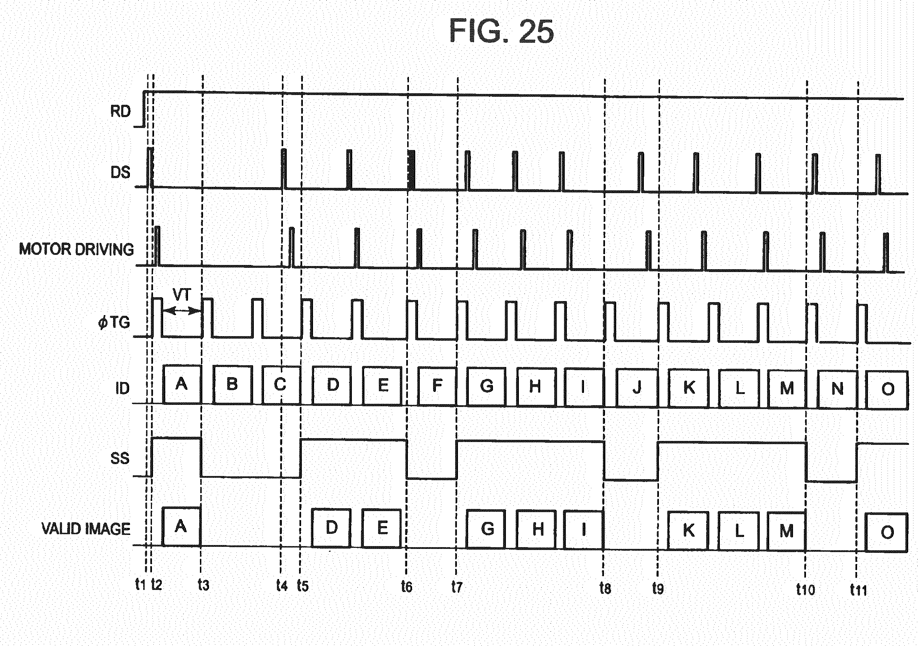

Next, examples of operations of the image reading device 10 shown in Figs. 21 to 24 that are performed under the above processes are described. The operation of when the finger 6 rested on the touch panel 7 rolls only in the normal rolling direction is first described referring mainly to Fig. 25. Although not shown in Fig. 25, the backing-returning signal BS is here maintained at the Low level.

If the finger 6 is rolled slowly in the beginning, a movement detection signal DS would not rise for a while after the rise of the movement detection signal DS at timing t₁. In this case, in response to a rise of the image output signal φTG (timing t2) immediately following a rise of the movement detection signal DS, an image selection signal SS rises up to validate image data ID (A). In addition, in response to the rise of the movement detection signal DS (timing t₁), the motor-driving signal is raised to move the CCD 12 through one line in the normal rolling direction.

As one time period of the image signal output cycle VT of the CCD 12 elapses (as a next image output signal φTG rises), the image selection signal SS falls down to change the condition into the mode that invalidates image data ID (timing t₃). The invalidation condition continues until a next rise of the image selection signal SS (timing t₅). Image data ID (B) and ID (C) output during this time are discarded.

At timing t₄, a second rise of the movement detection signal DS is detected. Validation of image data ID (D) and motor driving is conducted in the manner described above. As the rolling speed of the finger 6 increases after the timing t₄, the movement detection signal DS would be raised at short time periods. In accordance to this, image data ID will be validated more frequently: image data ID (E) that follows the image data ID (D) is also validated.

In the following time (timing t₆-t₁₁), image data ID will be likewise classified into valid and invalid images according to the progress of the finger 6 rolling. In addition, the CCD 12 is intermittently moved in the forward direction as appropriate in order to perform reading operation. Upon completion of reading, the image reading device 10 connects together sets of valid image data stored in the memory 24: ID (A), ID (D), ID (E), ID (G), ID (I), ID (K) to (M), and ID (O). One fingerprint image can then be obtained. The connecting of these sets of image data ID requires no advanced data editing such as image combining but can be done by only reading out the image data ID stored within the memory 24 in the order they were stored.

As described heretofore, in the second exemplary embodiment, while image signals IS are periodically output line by line from the CCD 12, the moving distance of the finger 6 pressing position is detected and the CCD 12 moves in accordance with the rolling of the finger 6. In addition, image data ID is selectively validated each time the moving distance of the finger 6 pressing position reaches the line width LW. Thus, a fingerprint image can be sequentially acquired line by line while avoiding overlapping of fingerprint image elements (overlapping of images). A whole image of a rolled fingerprint is created by connecting a plurality of sets of line-by-line image data ID together. The connections between the images are therefore unlikely to distort compared to a case where a whole image is formed by connecting frame images (area images). Thus, high-quality images having minimized distortion can be acquired without a distortion correcting process which is performed in conventional technology.

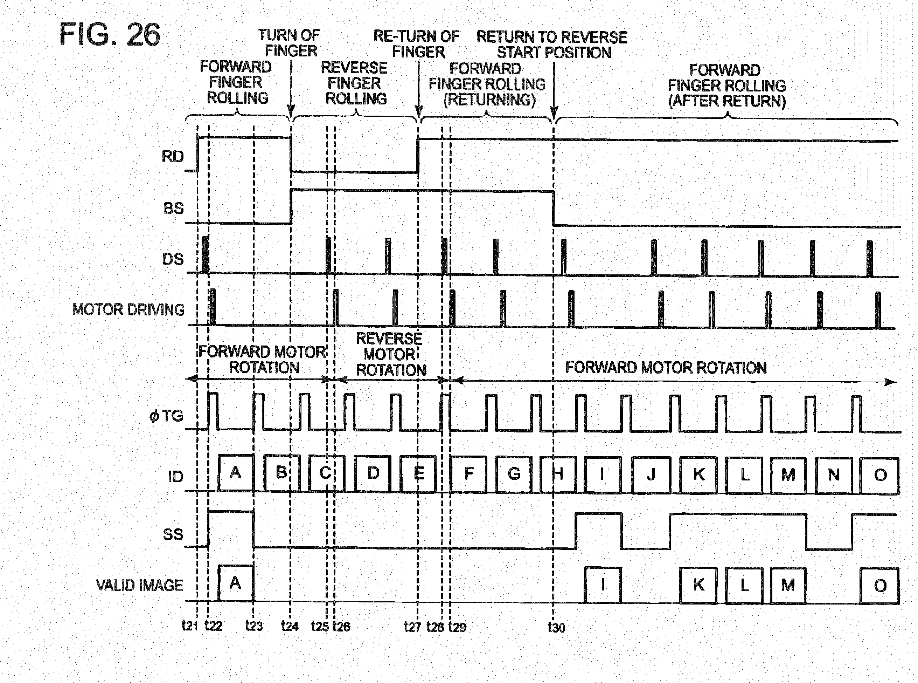

Next, operation of when the rolling direction of the finger 6 rested on the touch panel 7 is reversed is described below referring mainly to Fig. 26.

During the time from timing t₂₁ to t₂₄ where the finger 6 rolls in the normal rolling direction, the direction signal RD maintains the Hi level and the device operates in substantially the same manner as the operation during the timing t₁-t₃ shown in Fig. 25.

When the rolling direction of the finger 6 reverses at the timing t₂₄ and the finger 6 pressing position begins to move in the reverse rolling direction, the backing-returning signal BS rises to the Hi level. The backing-returning signal BS is kept at the Hi level until timing t₃₀ at which the finger 6 returns to the reverse start position (the position at which the rolling direction of the finger 6 changed from normal to reverse). Image data ID (C) to (H) which were output in the time interval from timing t₂₄ to timing t₃₀ are all invalidated and discarded.

At timing t₂₅, the reverse moving distance of the finger 6 reaches the line width LW. The motor-driving signal then rises at timing t₂₆. The motor 25 counter rotates to move the CCD 12 in the reverse direction.

After this, as the rolling direction of the finger 6 reverses once again at timing t₂₇ and the pressing position of the finger 6 starts moving in the forward direction, the direction signal RD rises to the Hi level. When the normal moving distance of the finger 6 reaches the line width LW at timing t₂₈, the motor-driving signal rises at timing t₂₉ to rotate the motor 25 in the forward direction, whereby moving the CCD 12 in the forward direction.

In the time following the timing t₃₀ at which the finger 6 returns to the starting position of reversal, image data ID will be selectively classified into valid and invalid images according to the progress of finger 6 rolling as in Fig. 25. In addition, CCD 12 moves in the forward direction as appropriate in order to perform reading operation.

As described heretofore, in the second exemplary embodiment, the timing at which the rolling direction of the finger 6 reverses, and the timing at which the finger 6 reverses again (re-reverses) and returns to the reverse start position are detected. All image data ID obtained in the time interval between the two timings are determined invalid. Therefore, image data ID generated during the time through which the subject did not properly roll the finger 6 can be discarded appropriately. This prevents the image data ID of this time from being mixed into the image after being connected so that a disturbance in the connected image can be avoided. Thus, even when the subject changes the rolling direction of his or her finger 6 during reading, the subject does not need to start reading again, consequently improving convenience for the subject.

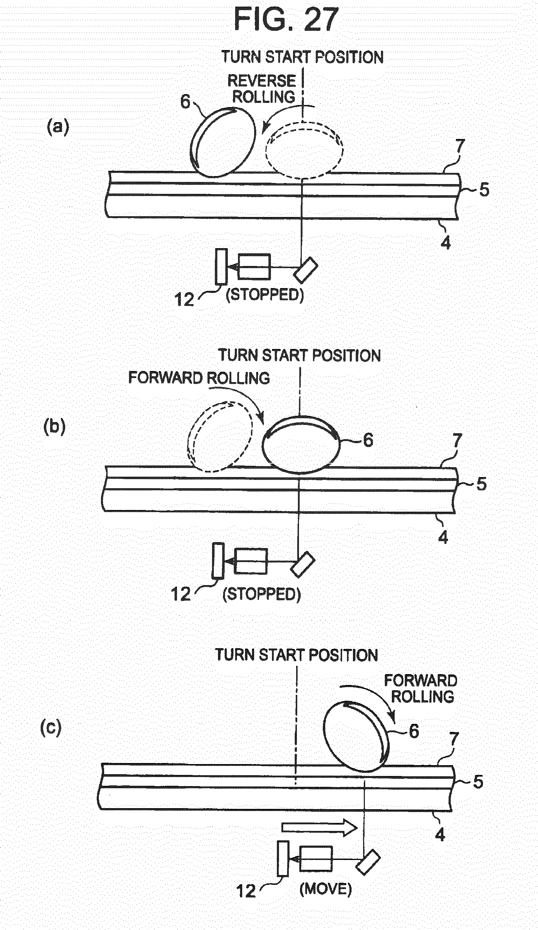

Incidentally, as shown in Fig. 24(b), the second exemplary embodiment was configured such that the CCD 12 moves to follow the movement of the finger 6 when the rolling direction of the finger 6 reverses. Meanwhile, as shown in Fig. 27, the CCD 12 may stay at the reverse start position of the finger 6 and not move in the reverse direction even when the finger 6 is rolling in the reverse direction. The CCD 12 may stand by until the finger 6 reverses again and returns to the reverse start position. After the finger 6 has returned to the reverse start position, the CCD 12 moves in the forward direction so as to follow the movement of the finger 6 pressing position as in Fig. 25.

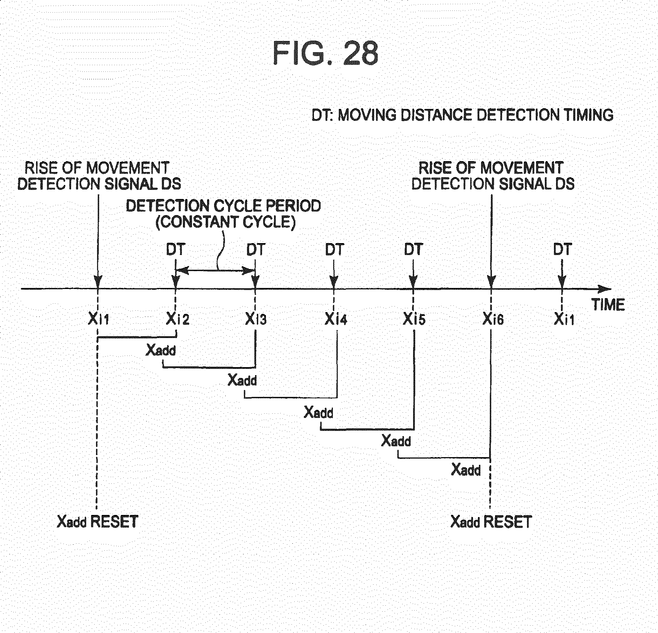

Additionally, in the second exemplary embodiment, the detector 44 holds the X-coordinate data Xₘ obtained with the rise of the movement detection signal DS for determining whether the moving distance of the finger 6 pressing position reaches the line width LW. The moving distance detector 44 calculates the moving distance (Xᵢ-Xₘ) by subtracting the X-coordinate data Xₘ from the current position X-coordinate data Xᵢ, and determines whether the calculated moving distance (Xᵢ-Xₘ) is equal to or greater than the line width LW. Alternatively as shown in Fig. 28, the moving distance detector 44 may calculate a moving distance X_{add} by cumulatively adding X-coordinate data Xᵢ₁-Xᵢ₆ obtained at each period of the detection cycle DT. The moving distance detector 44 may determine whether the moving distance X_{add} is equal to or greater than a length equivalent to the line width LW. In this case, the moving distance X_{add} is reset to "0" with each rise of the movement detection signal DS.

Furthermore referring to Fig. 15, in the second exemplary embodiment, the initial position detector 41 acknowledges the pressing position of the finger 6 by uniformly adding or subtracting a predetermined value "r". The process may instead be done by calculating X_{D1}+{(X_{D2}-X_{D1})/2} or X_{D2}-{(X_{D2}-X_{D1})/2} in the initial position detector 41 and the current position detector 43 to find a central coordinate of X-coordinate data X_{D1} and X-coordinate data X_{D2} at each time, and then acknowledging the central coordinate as the pressing position.

As described above, the second exemplary embodiment can obtain sharp and clear fingerprint images even when the object is rolled by use of a diffuser. The selector 51 selectively validates image data ID each time the moving distance of the finger 6 pressing position reaches the line width LW. Thus, high-quality images having minimized distortion can be acquired without a distortion correcting process which is conducted in the conventional technology. This in turn prevents the complexity of signal-processing circuits and software so that the device can be reduced in cost.

Heretofore, the first and the second exemplary embodiments of the present invention have been described. The invention is not limited to/by the above configurations and may incorporate various changes and modifications within the scope of the invention, set forth in the appended claims. For example, in the first and second exemplary embodiments, a CCD has been taken as an example of the line sensor for outputting the image signal IS. However, it is not necessary to use CCDs as the line sensor. The line sensor may instead be a CMOS (Complementary Metal-Oxide Semiconductor) sensor or any other appropriate imaging element.

The first and the second exemplary embodiments showed cases where the image reading device according to the present invention is used for reading of fingerprints. The kind of object to be read, however, is not limited to a finger and may be any other object.

Furthermore, the system of the second exemplary embodiment can be applied in various ways as long as the object is read by rolling the object along the touch panel 7. An example of such application is a surface inspection of beverage or food cans. Although the object to be read is preferably cylindrical, any other object, even of a somewhat distorted shape, can be used as long as it can be rolled along the touch panel 7.

The present invention has been described with reference to the exemplary embodiments and examples, but the present invention is not limited to the exemplary embodiment and examples. Further, various changes that person having ordinary skill in the art can understand can be made on the configuration or details of the present invention within the scope of the present invention.

This application claims priority to and the benefit of Japanese Patent Application No. 2011-014889 filed on January 27, 2011, the disclosure of which is incorporated by reference herein.

### Reference Signs List

- 1, 10: Image reading device
- 2: Scanner frame
- 3: Reading unit
- 4: Platen glass
- 5: Diffuser
- 6: Finger
- 7: Touch panel
- 11: Light source
- 12: CCD
- 13: Mirror
- 14: Optical lens
- 15: Unit enclosure
- 16: Optical axis
- 21: CCD driver
- 22: Command receiver
- 23: Image signal processor
- 24: Memory
- 25: Motor
- 26: Motor driver
- 27: Coordinate detection means
- 28: Movement detection means
- 29: Image classification means
- 30: Motor controlling means
- 31: Touch detector
- 32: X-coordinate data generator
- 41: Initial position detector
- 42: Start position calculator
- 43: Current position detector
- 44: Moving distance detector
- 45: Reversal detector
- 51: Selector
- 52: Gate
- 61: Motor driver
- 62: Start position controller

## Claims

1. An image reading device for reading an image of a fingerprint or other objects, the image reading device comprising:
an object resting unit constructed of a plate member that transmits light, the object resting unit resting the object thereon; and
an image reading unit including a light source for irradiating the object with light, and image capturing means for capturing the image of the object and outputting an image signal associated with the object;
wherein:
the image reading unit further includes
image reading means positioned at a side opposite to the surface of the object resting unit with which the object contacts, the image reading means reading one line of a light receiving surface of the object as a horizontal scanning by using a line sensor provided to the image capturing means, and
transport means for moving the image reading unit in a vertical scanning direction perpendicular to the horizontal scanning; and
the object resting unit includes a diffusion member for diffusing light.

2. The image reading device according to claim 1, wherein the diffusion member has a diffusion face at the surface on which the object is rested.

3. The image reading device according to claim 1 or 2, wherein the diffusion member diffuses incident light in the vertical scanning direction.

4. The image reading device according to any one of claims 1 to 3,
wherein the light source determines an irradiation angle of the light according to an angle at which the diffusion member diffuses the light.

5. The image reading device according to any one of claims 1 to 4,
wherein the light source and the line sensor are arranged such that the line sensor receives light reflected, at a position where the object contacts with the object resting unit, with a reflection angle equal to an incidence angle.

6. The image reading device according to any one of claims 1 to 5, further comprising:
a touch panel attached onto the surface of the diffusion member, the touch panel outputting coordinate information in the vertical scanning direction which represents a pressing position at which the object presses the touch panel; and
detection means for detecting, in accordance with the coordinate information output from the touch panel, a moving distance through which the pressing position of the object has moved in the vertical scanning direction;
wherein the transport means, in accordance with the moving distance detected by the detection means, moves the image-reading unit in the vertical scanning direction so that the image-reading unit follows a rolling action of the object.
